# EUROPEAN PATENT APPLICATION

(11) **EP 4 811 032 A2**
(43) Date of publication of application: **23.09.2026**
(21) Application number: 26166519.4
(22) Date of filing: 20.03.2026
(51) Int. Cl.: G03B 21/14, G03B 21/16, G03B 21/26, F21S 6/00, F21V 23/00, F21V 33/00, G03B 29/00, H05B 45/10, H05B 45/20, H05B 45/325

(54) **PROJECTOR**

(30) Priority: 21.03.2025 JP 2025046467
(71) Applicant: Seiko Epson Corporation, Tokyo 160-8801 (JP)
(72) Inventor: AKAHANE, Takashi, Suwa-shi, 392-8502 (JP); MIYAJIMA, Tomonori, Suwa-shi, 392-8502 (JP); OTSUKA, Hiroyuki, Suwa-shi, 392-8502 (JP); YAMANE, Sosei, Suwa-shi, 392-8502 (JP); TAKAMINE, Yusaku, Suwa-shi, 392-8502 (JP); OTSUKI, Nobuyuki, Suwa-shi, 392-8502 (JP)
(74) Representative: Lewis Silkin LLP

(57) **Abstract**

A projector includes: a first light source; an optical system configured to emit image light based on light from the first light source; a housing having a first surface and configured to house the first light source and at least a part of the optical system; a plurality of second light sources different from the first light source and configured to emit light from the first surface side to an outside of the housing; and a controller provided to the housing and configured to control the plurality of second light sources.

## Description

The present application is based on, and claims priority from JP Application Serial Number 2025-046467, filed March 21, 2025, the disclosure of which is hereby incorporated by reference herein in its entirety.

### BACKGROUND

### 1. Technical Field

The present disclosure relates to a projector.

### 2. Related Art

JP-A-2021-056252 discloses a projector including a projector device that projects an image from an optical system onto a close-range vertical plane in an enlarged manner, a cover member that covers outer peripheral side surfaces of the projector device, and an illumination light projection device that projects illumination light outside the cover member.

In JP-A-2021-056252, the projector device stands upright on the vertical plane as a projection surface. The illumination light from the illumination light projection device is reflected by an inner side surface of the cover member and irradiates the vertical surface above the cover member. The image by the projector device is projected on the vertical surface below the cover member.

JP-A-2021-056252 is an example of the related art.

However, JP-A-2021-056252 does not disclose a device for operating a light source of the illumination light projection device, and it is not easy for the user to control the light source of the illumination light projection device.

### SUMMARY

A projector according to the present disclosure includes: a first light source; an optical system configured to emit image light based on light from the first light source; a housing having a first surface and that houses the first light source and at least a part of the optical system; a plurality of second light sources different from the first light source and configured to emit light from the first surface side to an outside of the housing; and a controller provided to the housing and configured to control the plurality of second light sources.

A projector according to the present disclosure includes: a first light source; an optical system configured to emit image light based on light from the first light source; a housing that houses the first light source and at least a part of the optical system and including a first surface and a second surface facing the first surface; a plurality of second light sources different from the first light source and configured to emit light from the first surface side to an outside of the housing; a touch sensor disposed on the second surface and configured to control the plurality of second light sources; a leg configured to support the housing from the first surface; and a rotation mechanism configured to rotate the housing relative to the leg.

A projector according to the present disclosure includes: a first light source; an optical system configured to emit image light based on light from the first light source; a housing that houses the first light source and at least a part of the optical system, and including a first surface and a second surface facing the first surface; a plurality of second light sources which is different from the first light source, disposed along a contour of the first surface, and configured to emit light from the first surface side to the outside of the housing; a touch sensor disposed on the second surface and configured to control the plurality of second light sources; at least one third light source different from the first light source and the plurality of second light sources and configured to emit light to the outside of the housing; a driver element configured to control the plurality of second light sources; an integrated circuit element housed in the housing and configured to control the at least one third light source and the driver element; a microcontroller configured to perform processing according to an output of the touch sensor; a power supply circuit configured to supply electric power to the plurality of second light sources, the at least one third light source, and the microcontroller; a leg including a first portion having a long axis and configured to support the housing from the first surface side; and a rotation mechanism configured to rotate the housing relative to the leg, wherein a first end along the long axis of the first portion of the leg is coupled to a first recess having the long axis and opening on the first surface, and a rotational direction of the housing by the rotation mechanism is a direction along the long axis of the first recess.

### BRIEF DESCRIPTION OF THE DRAWINGS

FIG. 1 is a perspective view of a projector viewed from the front.
FIG. 2 is a perspective view of the projector viewed from the back.
FIG. 3 is a diagram illustrating an optical configuration of the projector.
FIG. 4 is a perspective view showing a state in which a projector main body is rotated.
FIG. 5 is a perspective view showing a lower part of the projector with a housing removed.
FIG. 6 is a top view showing a top surface of the housing with a cover removed.
FIG. 7 is a cross-sectional view taken along the line VII-VII in FIG. 6.
FIG. 8 is a diagram showing the projector main body with the housing and the cover removed.
FIG. 9 is a perspective view showing an auxiliary substrate.
FIG. 10 is a block diagram showing a configuration of a substrate.

### DESCRIPTION OF EMBODIMENTS

### 1. Projector Main Body

An embodiment will hereinafter be described with reference to the accompanying drawings.

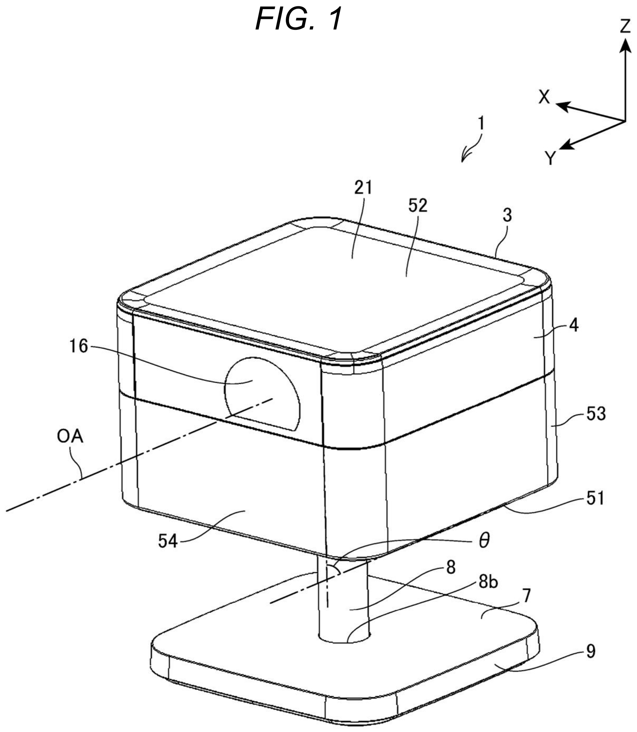

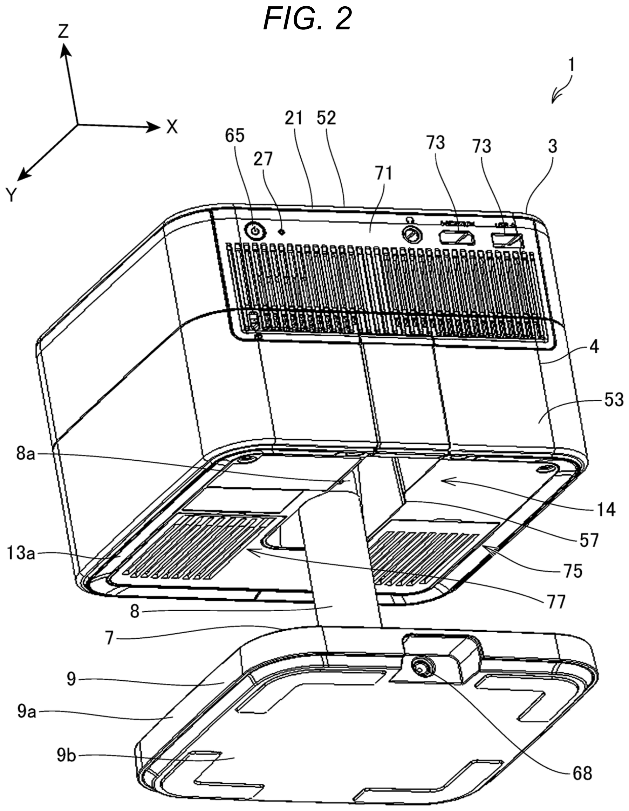

FIG. 1 is a perspective view of a projector 1 viewed from the front. FIG. 2 is a perspective view of the projector 1 viewed from a back side.

The projector 1 is, for example, home-use and is used while being placed on, for example, a side table of a bed in a bedroom.

The projector 1 includes a projector main body 3 shaped like a rectangular box and a leg 7 that supports the projector main body 3. The projector main body 3 includes a housing 4 shaped like a substantially rectangular parallelepiped and a cover 21 that covers a top surface 52 of the housing 4. The top surface portion of the projector main body 3 has a double structure configured with the top surface 52 of the housing 4 and the cover 21. In the following description, an axis along a support pipe 8 is defined as a Z axis. Two axes orthogonal to the Z axis and orthogonal to each other are defined as an X axis and a Y axis. Out of the two axes, an axis extending along an optical axis when a base 9 and the cover 21 are parallel to each other as shown in FIG. 1 is defined as the Y axis, and the other axis is defined as the X axis. A positive direction of the Z axis is a direction from the base 9 toward the cover 21. Therefore, in the projector 1, the base 9 side is relatively a lower side and the cover 21 side is relatively an upper side along the Z axis. A positive direction of the Y axis is a direction in which image light is projected when the base 9 and the cover 21 are parallel to each other. Therefore, when the base 9 and the cover 21 are parallel to each other, a front surface 54 side is relatively a front side and a back surface 53 side is relatively a rear side. A positive direction of the X axis is a right hand side when one faces forward. Note that "along" used here is not limited to when two things are completely parallel to each other. The support pipe 8 and the base 9 will be described later.

As shown in FIG. 1, a projection lens 16 that projects the image light is provided to the front surface 54 of the projector main body 3. FIG. 1 shows an optical axis OA of the image light projected onto a projection surface by the projection lens 16. The optical axis OA is the central axis of the projection image, and is, for example, a virtual axis passing through the optical center of the projection lens 16. In FIG. 1, the image of the projector main body 3 is projected forward, and the optical axis OA is parallel to an installation surface of the projector 1. The front surface 54 is an example of a "fourth surface".

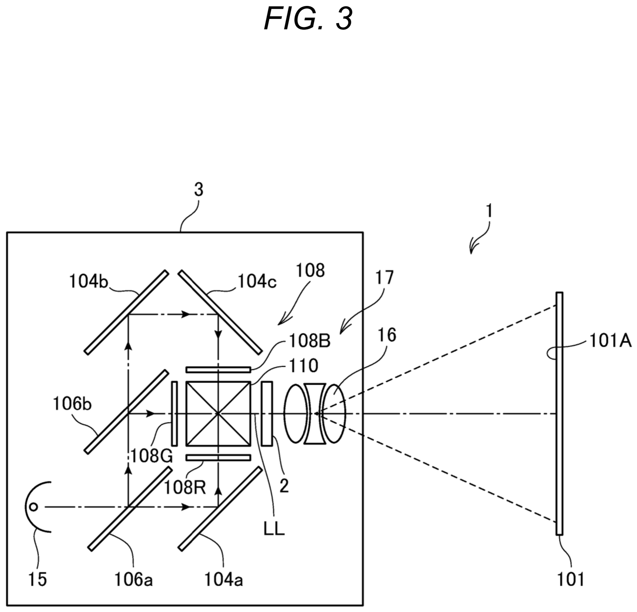

FIG. 3 is a diagram illustrating an optical configuration of the projector main body 3. This optical configuration is housed inside the projector main body 3.

The projector main body 3 includes a first light source 15 and a light modulation device 108 that modulates light emitted by the first light source 15 based on an image signal input from the outside, and projects a projection image 101A on a screen 101. As the light modulation device of the projector main body 3, a transmissive or reflective liquid crystal display (LCD), a digital micromirror device (DMD), or the like can be used. Here, the projector main body 3 including liquid crystal display elements 108R, 108G, and 108B as the light modulation device 108 will be described as an example. The number of elements provided to the light modulation device is not limited to three, and may be one or two. Functions of the first light source 15 and the light modulation device 108 may be implemented by a micro LED panel.

The projector main body 3 includes the first light source 15 and an optical system 17 that outputs the image light based on light from the first light source 15. The optical system 17 includes a light modulation device 108, mirrors 104a, 104b, and 104c, dichroic mirrors 106a, 106b, a dichroic prism 110, an optical path shifting device 2, and the projection lens 16. The first light source 15 and at least a part of the optical system 17 are housed in the housing 4. The optical system 17 may be entirely housed in the housing 4, and a part, such as the projection lens 16, of the optical system 17 may be disposed outside the housing 4.

Examples of the first light source 15 include a halogen lamp, a mercury lamp, a light emitting diode (LED), and a laser source. Further, as the first light source 15, a light source that emits white light is used. The light emitted from the first light source 15 is separated into red light (R) and the rest of the light by, for example, the dichroic mirror 106a.

The red light is reflected by the mirror 104a, then enters the liquid crystal display element 108R, while the rest of the light is further separated by the dichroic mirror 106b into green light (G) and blue light (B). The green light enters the liquid crystal display element 108G, and the blue light is reflected by the mirrors 104b, 104c, and then enters the liquid crystal display element 108B. The dichroic mirrors 106a, 106b correspond to a spectroscopic element that separates the light emitted by the first light source 15 into the red light (R), the green light (G), and the blue light (B).

The liquid crystal display elements 108R, 108G, and 108B are transmissive spatial light modulators corresponding respectively to primary colors of R, G, and B. The liquid crystal display elements 108R, 108G, and 108B are each an example of a "light modulation element". Each of the liquid crystal display elements 108R, 108G, and 108B includes, for example, a liquid crystal panel including pixels arranged in a matrix having vertically 1080 rows and horizontally 1920 columns. In each of the pixels, an amount of the transmitted light with respect to the incident light is adjusted, and a light amount distribution of all the pixels is cooperatively controlled in each of the liquid crystal display elements 108R, 108G, and 108B. The light spatially modulated by the liquid crystal display element 108R, the light spatially modulated by the liquid crystal display element 108G, and the light spatially modulated by the liquid crystal display element 108B are combined with each other by the dichroic prism 110, and full-color image light LL is emitted from the dichroic prism 110. The image light LL thus emitted is enlarged by at least one lens and is projected onto the screen 101.

As shown in FIG. 3, the at least one lens projects the light modulated by the liquid crystal display elements 108R, 108G, and 108B onto the screen 101 to form the projection image 101A on the screen 101. In the present embodiment, the at least one lens includes the projection lens 16. The optical system in a posterior stage of the optical path shifting device 2 may be an optical system including at least one or more mirrors, or may be an optical system including one or more lenses and one or more mirrors. The optical system 17 may include a mechanism that adjusts the position of at least one lens for adjusting a position of a focus on the screen 101 or a position of the image on the screen 101.

The optical path shifting device 2 is disposed between the dichroic prism 110 and the optical system 17. The projector 1 can display an image having resolution higher than the resolution of the liquid crystal display elements 108R, 108G, and 108B on the screen 101 by performing so-called optical path shifting of shifting an optical path of the image light LL with the optical path shifting device 2. For example, when using the liquid crystal display elements 108R, 108G, and 108B compliant with full high definition for displaying an image of 1920 pixels×1080 pixels as described above, an image equivalent to 4K resolution can be displayed on the screen 101.

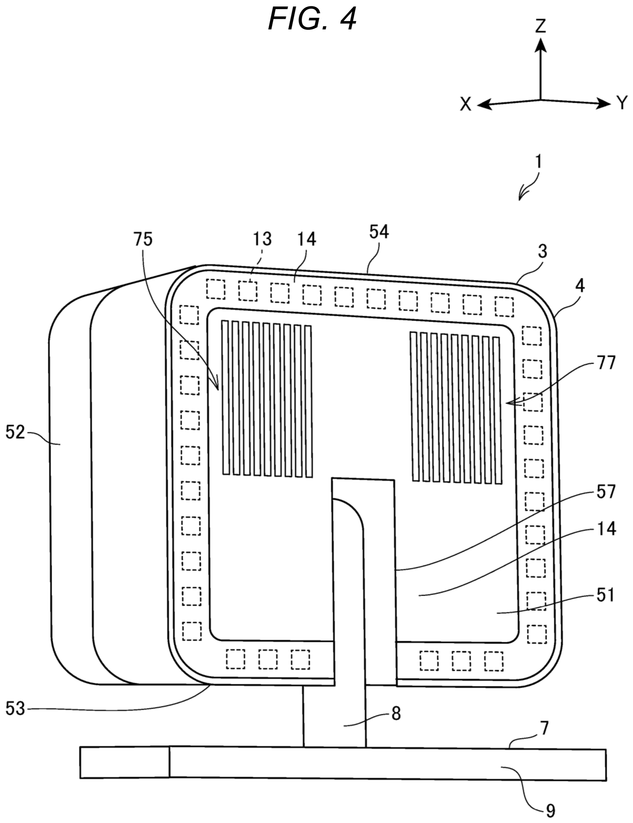

FIG. 4 is a perspective view showing a state in which the projector main body 3 is rotated.

The projector main body 3 includes a swing mechanism that rotates the projector main body 3 relative to the leg 7.

The projector main body 3 is freely displaced from the state shown in FIG. 2 to the state shown in FIG. 4 by the swing mechanism (not shown). Due to the swing mechanism, the projector main body 3 preferably takes two or more displacement positions, may be displaced smoothly, and may be displaced in a plurality of stages. Further, the displacement may be realized by any of a horizontal rotation, a vertical rotation, and a three-dimensional rotation. The swing mechanism is, for example, a uniaxial hinge, a biaxial hinge, or a ball joint. The swing mechanism is an example of a "rotation mechanism".

As shown in FIGS. 2 and 4, the leg 7 includes the base 9 having a substantially rectangular shape and the support pipe 8 having a cylindrical shape extending upward from the center of the base 9. By installing the leg 7 on a placement surface such as a table, the projector 1 can be installed on a table or the like. The support pipe 8 is an example of a "first portion". The base 9 is an example of a "second portion".

A first end 8a of the support pipe 8 is coupled to the projector main body 3 and a second end 8b thereof different from the first end 8a is coupled to the base 9.

The first end 8a along a long axis of the support pipe 8 is inserted into a cutout 14 that opens on a bottom surface 51 of the projector main body 3 and has a long axis 57, and is coupled at the bottom surface 51 side of the projector main body 3 via the swing mechanism. A surface where the cutout 14 is present is one surface from which illumination light from a plurality of LEDs 13 described later is emitted. In the present embodiment, the "one surface" of the projector main body 3 is a "first surface", that is, the bottom surface 51 of the projector main body 3. The bottom surface 51 faces the placement surface when the leg 7 is installed on the placement surface and the base 9 and the cover 21 are parallel to each other.

The projector main body 3 is swung by the swing mechanism in a direction along the long axis 57 of the cutout 14. The cutout 14 is an example of a "first recess". In the present embodiment, a rotation of the projector main body 3 with the swing mechanism is a rotation in the direction along the long axis of the cutout 14 and a rotation around the long axis of the support pipe 8. The rotation in the direction along the long axis of the cutout 14 is a rotation in which the direction along the long axis changes, for example, around the first end 8a which is an example of a rotation axis. Furthermore, the rotation in the direction along the long axis of the cutout 14 is, for example, a pitch rotation around the X axis of the projector main body 3. Further, the rotation around the long axis of the support pipe 8 is, for example, a yaw rotation around the Y axis of the projector main body 3. The projector main body 3 may be allowed to perform a roll rotation around the Z axis, or may be allowed to perform a rotation in which at least two of the pitch rotation described above, the yaw rotation described above, and the roll rotation are combined with each other.

The number of support pipes 8 is not limited to one, and it is possible to adopt a structure having two support pipes 8, three support pipes 8, or the like. The support pipe 8 may have a structure of being bent or branched in the middle. A cross section of the support pipe 8 may have various shapes such as a circular shape and a rectangular shape, and the leg 7 may have, for example, a plate shape.

Further, the shape of the base 9 is not particularly limited, and may be various shapes such as a disk shape. Further, the leg 7 may be configured only with the support pipe 8 without including the base 9.

### 2. Illumination System

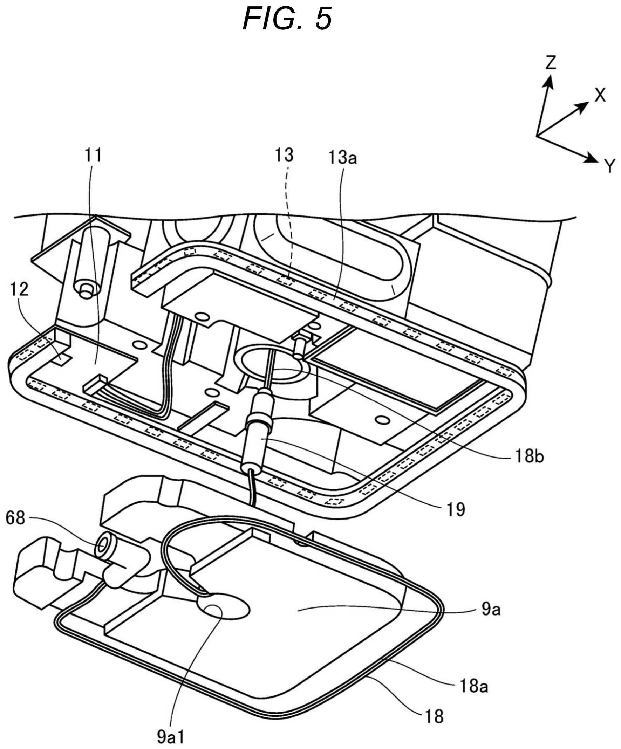

FIG. 5 is a perspective view showing the lower portion of the projector 1 with the housing 4 removed, and is a diagram in which the housing 4, the cover 21, and the leg 7 of the projector 1 are partially omitted.

As illustrated in FIG. 5, an illumination substrate 11 having a substantially C-shape is disposed on the bottom surface 51 of the housing 4 so as to surround the leg 7. The bottom surface 51 is an example of the "first surface". The illumination substrate 11 is an example of a "second substrate".

As illustrated in FIGS. 2 and 4, the illumination substrate 11 is disposed along a contour of the bottom surface 51. The plurality of LEDs 13 different from the first light source 15 is mounted on the illumination substrate 11. The plurality of LEDs 13 is covered with an LED cover 13a made of a box-shaped transparent member. The illumination substrate 11 is provided with an LED driver 12. The plurality of LEDs 13 is controlled by the LED driver 12. The illumination substrate 11 is an example of a "second substrate". The LED driver 12 is an example of a "driver element". The bottom surface 51 is an example of the "first surface". The "first surface" faces the placement surface when the leg 7 is placed on the placement surface. Each of the plurality of LEDs 13 is an example of a "second light source". The light from the plurality of LEDs 13 may dimly illuminate the periphery of a side table of a bed like a lamp placed on the side table. As described above, since the projector 1 also functions as illumination, it is possible to improve convenience and a presentation effect.

The plurality of LEDs 13 is arranged along the contour of the bottom surface 51, and is then interrupted at an opening of the cutout 14 formed in the bottom surface 51 to be arranged in a substantially C-shape. The substantially C-shape is not a limitation, and the plurality of LEDs 13 may continuously extend along the entire circumference of an edge of the cutout 14 and may be arranged in an annular shape although not illustrated. Note that in the LEDs 13, at least two LEDs 13 are preferably arranged along the contour of the bottom surface 51, and some of the LEDs 13 are not arranged along the contour. Further, the LED 13 may be disposed in an outer peripheral portion of the support pipe 8, or may be disposed on both the bottom surface 51 and the support pipe 8.

The illumination light from the plurality of LEDs 13 is emitted from the bottom surface 51 side of the housing 4. Specifically, the illumination light is emitted from an exit surface of the bottom surface 51 of the housing 4. The exit surface may be formed at a position recessed from the bottom surface 51, may be formed flush with the bottom surface 51, or may be formed in a convex shape protruding from the bottom surface 51.

For example, when the exit surface is formed at the recessed position, since the plurality of LEDs 13 is not exposed from the bottom surface 51, the LEDs 13 are protected.

The exit surface in the present embodiment refers to a surface of the LED cover 13a from which the light from the LEDs 13 is emitted.

The exit surface may be disposed flush with the bottom surface 51 or may protrude from the bottom surface 51. When the exit surface is disposed flush with the bottom surface 51 of the housing 4, since the bottom surface 51 and the exit surface constituting the outer surface of the housing 4 are the same in height, the aesthetic appearance is improved, and damage to the LEDs 13 is suppressed. Further, when the exit surface is made to protrude from the bottom surface 51, it is possible to dimly illuminate the periphery of the side table more effectively. Further, the plurality of LEDs 13 may be configured to change the luminance in accordance with a use environment.

The plurality of LEDs 13 may be arranged at regular intervals or may be arranged at intervals different from each other. When the intervals are equal, the illumination light is more likely to be uniform and the aesthetic appearance of the illumination is further improved than when the intervals are different. A distance between two LEDs 13 adjacent to each other out of the plurality of LEDs 13 is no smaller than 5 mm and no larger than 30 mm. The distance is a distance in plan view and is a distance between the centers of the two LEDs 13 adjacent to each other. When the distance is less than 5 mm, there is a concern of a mutual thermal influence between the LEDs 13, and the difficulty in mounting the LEDs 13 increases. When the distance exceeds 30 mm, expressiveness of a production with the LEDs 13 is reduced, and a shadow with the adjacent LED 13 becomes conspicuous.

The number of LEDs 13 mounted thereon is no smaller than 10 and no larger than 100, and preferably no smaller than 20 and no larger than 50. When the number is less than 24, the production may provide a dreary impression. As an example, when the number of LEDs 13 mounted is 24, the distance is 24 mm.

In the present embodiment, the number of LEDs 13 mounted is 36, and the mounting distance is 16 mm. However, another LED 13 may be added between the LEDs 13. In this case, the mounting distance of the LEDs 13 is 8 mm. When two LEDs 13 are added, the mounting distance is 5 mm. In this case, the difficulty in mounting is slightly high, and the arrangement is difficult.

The plurality of LEDs 13 may include a first light emitting element that emits light of a first color and a second light emitting element that emits light of a second color different from the first color.

The first light emitting element is a light emitting diode element that emits the light of the first color, and the second light emitting element is a light emitting diode element that emits the light of the second color.

That is, since each of the "second light sources" includes the light emitting diode element, the degree of freedom in color or element arrangement is increased, it is possible to increase the degree of design freedom, and the presentation effect and the convenience are improved. One second light source may be one light emitting element, or each of the plurality of second light sources may include a plurality of light emitting elements respectively emitting light different in color from each other. When each of the plurality of second light sources includes a plurality of light emitting elements, since each of the second light sources can express various colors, the production performance by the illumination can be improved. As an example, an LED chip including light emitting elements of three colors of R, G, and B may be used.

A plurality of colors may be expressed by control of changing colors of light from the plurality of LEDs 13. For example, it is possible to change the color or blink the color in accordance with the state or setting of the projector 1 at the time of activation. Since the LEDs 13 are located on the bottom surface 51, when the base 9 and the cover 21 are parallel to each other, when the bottom surface 51 is directed to the wall surface of the room with the swing mechanism, or the like, indirect illumination is performed and glare is not caused to be felt when the projector 1 performs projection.

The LED 13 may be an LED chip or an organic EL panel. It is sufficient that light can be emitted from the plurality of second light sources to the outside, and the attachment positions of the second light sources are not limited.

For example, the second light sources may be located inside the projector main body 3 or may be attached to the surface of the projector main body 3.

### 3. Image and Direction of Illumination

As shown in FIG. 1, the projector main body 3 includes the bottom surface 51 from which the illumination light from the plurality of LEDs 13 is emitted and the front surface 54 from which the image light from the optical system 17 is emitted.

The image light and the illumination light are emitted from respective surfaces different from each other of the projector main body 3. In the present embodiment, the image light is emitted from the front surface 54, and the illumination light is emitted from the bottom surface 51. An angle θ between the front surface 54 and the bottom surface 51 is 90 degrees. That is, the angle θ between the direction in which the image light from the projector main body 3 is emitted and the direction in which the illumination light from the plurality of LEDs 13 is emitted is 90 degrees. Therefore, it is possible to prevent the projected image from being difficult to see due to the illumination light.

In the above description, the projector main body 3 is assumed to have a rectangular box shape having six surfaces different from each other, but when the projector main body 3 has a cylindrical shape, it is possible to dispose the projection lens 16 at the front surface side of the projector main body 3 and arrange the plurality of LEDs 13 at the back surface side, although not illustrated.

In this case, the angle θ between the direction in which the image light is emitted and the direction in which the illumination light is emitted is preferably no smaller than 90 degrees. Further, regardless of the shape of the projector main body 3, the angle between the optical axis OA of the image light and the outer surface of the projector main body 3 is not limited to 90 degrees. For example, in the projector main body 3 according to the present embodiment, the angle between the front surface 54 and the optical axis OA may be inclined in the positive direction of the Z axis, that is, the image light may be emitted obliquely upward from the front surface 54. Also in this case, the angle between the direction in which the image light is emitted and the direction in which the illumination light is emitted is larger than 90 degrees, and it is possible to prevent the projected image from being difficult to see due to the illumination light. Similarly, the angle between the direction in which the image light is emitted and the direction in which the illumination light is emitted may be made larger than 90 degrees by, for example, inclining the installation angle of the plurality of LEDs 13.

Here, the direction in which the image light is emitted refers to the direction in which the light travels along the optical axis of the image light.

In addition, the direction in which the illumination light is emitted refers to either one of a direction in which the light travels along the central axis of the entire light assuming the whole of the plurality of LEDs 13 as a single illumination, and a direction in which the light from a larger number of LEDs 13 travels out of the directions in which the light travels along the optical axes of the respective LEDs 13.

### 4. Touch Sensor

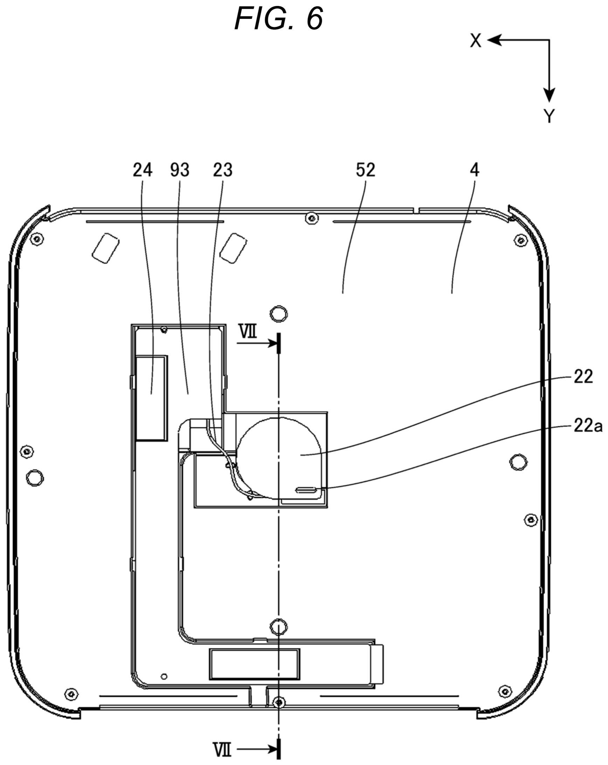

FIG. 6 is a top view illustrating the top surface 52 of the housing 4 with the cover 21 removed.

As illustrated in FIG. 1, the housing 4 includes the top surface 52. The top surface 52 faces the bottom surface 51 from which the illumination light from the LEDs 13 is emitted. A touch sensor 22 that detects contact of the user with the projector main body 3 is provided to the top surface 52, more specifically, disposed between the top surface 52 and the cover 21. When the projector 1 is placed on the placement surface and the placement surface and the bottom surface 51 are parallel to each other, the top surface 52 faces upward. Therefore, the user can easily operate the touch sensor 22 by touching the upper surface of the projector main body 3. The cover 21 is disposed on the touch sensor 22, and as shown in FIG. 6, the touch sensor 22 is disposed on a back surface of the cover 21. The top surface 52 is an example of a "second surface". The touch sensor 22 is an example of a "controller". Note that it is preferable for the touch sensor 22 that the leg 7 and the touch sensor 22 are not disposed on the same surface when the position of the projector main body 3 is displaced by the swing mechanism.

In the present embodiment, the touch sensor 22 is a copper foil tape. A sensor wire 23 is attached to an end of the touch sensor 22 by soldering. The sensor wire 23 is coupled to a microcontroller 24. An opening 22a having an oval shape is formed near a junction of the touch sensor 22 with the sensor wire 23. Accordingly, when the touch sensor 22 and the sensor wire 23 are soldered, excess solder is retained in the opening 22a. In other words, a part of the solder for coupling is disposed in the opening 22a. Therefore, the solder does not contaminate the touch sensor 22. As a result, the solder does not affect the touch sensor 22, and a decrease in sensitivity can be prevented. The solder is an example of a "conductive bonding material". The shape of the opening 22a may be circular or polygonal in plan view.

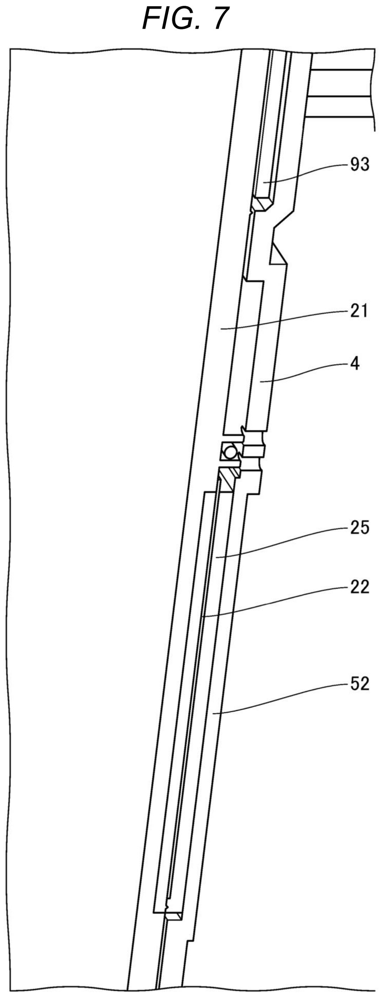

FIG. 7 is a cross-sectional view along the line VII-VII in FIG. 6.

A spacer 25 is disposed below the touch sensor 22, and in a state where the cover 21 is attached to the top surface 52, as illustrated in FIG. 6, the touch sensor 22 and the spacer 25 are sandwiched between the top surface 52 and the cover 21. The touch sensor 22 is in a state of being pressed by the spacer 25 against the back surface of the cover 21. Therefore, it is difficult for air to penetrate between the touch sensor 22 and the cover 21, and it is possible to prevent the sensitivity of the touch sensor 22 from decreasing due to air.

Since the touch sensor 22 is hidden by the cover 21, the external appearance of the projector 1 is improved. Further, since the touch sensor 22 is used, an ON-OFF operation of the illumination can be performed without using a remote controller for the illumination.

The ON-OFF operation, a change in luminance, a change in color of the illumination, and so on may be performed when the touch sensor 22 is repeatedly tapped.

The controller that controls the plurality of LEDs 13 is not limited to the touch sensor 22. For example, other switches, buttons, and touch panels may be used. The controller that turns on the plurality of LEDs 13 is preferably a sensor or the like that is attached to the projector main body 3 and can be operated by touching the projector main body 3 with a hand.

As shown in FIG. 2, a power button 65 is disposed on the back surface 53 of the projector main body 3. The power button 65 is a button for switching between ON and OFF of the operation of the projector main body 3.

As shown in FIG. 2, an indicator 27 that emits light to the outside of the projector main body 3 is disposed on the back surface 53 of the projector main body 3. The indicator 27 is an LED indicator using third light sources 28 different from the first light source 15 and the LEDs 13, and notify of the states of the first light source 15 and the optical system 17.

The indicator 27 is disposed on a surface different from the front surface 54 and the bottom surface 51, specifically, at the back surface 53. Since the indicator 27 is located at an opposite side to the projection lens 16, there is an advantage that the indicator 27 can be viewed without directly viewing the projection light. The back surface 53 is an example of a "third surface". In addition, since the indicator 27 is located at a different surface from the surface with the LEDs 13, it is possible to prevent the light of the indicator 27 from being difficult to see due to the light from the LEDs 13.

An exhaust port 71 and openings 73 for video terminals are disposed on the back surface 53 of the projector main body 3. One or more fans are disposed inside the projector main body 3. A first intake port 75 and a second intake port 77 are disposed on the bottom surface 51 of the projector main body 3. At least one of the openings 73 for the video terminal, the exhaust port 71, the first intake port 75, and the second intake port 77 may be disposed on the back surface 53. For example, any one of these elements may be disposed, or all of these elements may be disposed. The side surfaces of the projector main body 3 include four surfaces including the back surface 53 and the front surface 54 other than the bottom surface 51 and the top surface 52. By driving the fan, air is sucked into the projector 1 through the first intake port 75 and the second intake port 77. The air thus sucked cools heat generating equipment inside the projector 1 and is discharged from the exhaust port 71.

The position of the exhaust port 71 is not limited to the position at the back surface 53, and may be a position at the bottom surface 51, the top surface 52, or a side surface of the projector main body 3. Note that it is preferable for the exhaust port 71, the first intake port 75, and the second intake port 77 not to be disposed on the same surface in order to prevent the exhausted air from being sucked back.

Further, the touch sensor 22 is preferably disposed on a surface different from the surface having at least one of the exhaust port 71, the first intake port 75, and the second intake port 77. Accordingly, it is possible to prevent the dust guided along the air flow from adhering to the touch sensor 22. For the same reason, the touch sensor 22 is more preferably disposed on a surface that does not include any of the exhaust port 71, the first intake port 75, and the second intake port 77.

The openings 73 for the video terminals shown in FIG. 2 are each an insertion port of a connection terminal for supplying a video from external equipment to the projector main body 3. In the present embodiment, the openings 73 for the video terminals are each an opening for a universal serial bus (USB) terminal or a high-definition multimedia interface (HDMI) terminal. Therefore, by coupling the external equipment and the projector main body 3 with the USB terminal or the HDMI terminal, the projector main body 3 can project a video signal from the external equipment as the image light. The term HDMI is a registered trademark. Note that the openings 73 for the video terminals are preferably disposed on a surface different from the surface including the touch sensor 22. It is possible to prevent an operation of the touch sensor 22 from becoming difficult due to interference between the touch sensor 22 and a wire from the external equipment when the wire is coupled through the openings 73 for the video terminals.

### 5. Wiring System of Substrate

As shown in FIG. 2, the base 9 includes a base case 9a with a lower surface opened and a base cover 9b that covers the lower surface of the base case 9a.

As shown in FIG. 5, the base case 9a is provided with a circular hole 9a1 penetrating in a vertical direction. The second end 8b of the support pipe 8 is supported by the circular hole 9a1.

As shown in FIG. 2, the base 9 includes an AC adapter terminal 68 to be coupled to a power supply. The AC adapter terminal 68 is disposed on a side surface of the base case 9a. An AC adapter 20 is coupled to the AC adapter terminal 68. The AC adapter terminal 68 is an example of a "power supply terminal". The AC adapter 20 is an example of a "power supply adapter".

Since the AC adapter terminal 68 is not provided to the projector main body 3 but is disposed on the base 9 side, a power cable (not shown) for coupling the AC adapter terminal 68 and an external AC power supply does not interfere with the swinging of the projector main body 3.

As shown in FIG. 5, a power supply wire 18 extends from the AC adapter terminal 68. The power supply wire 18 is disposed along the outer circumference at a lower surface of the base case 9a, passes through an inside of the support pipe 8 from the circular hole 9a1, and is coupled to a power supply circuit 83 of a main substrate 81. As described above, by providing a play to the power supply wire 18, the workability at the time of assembly is facilitated, and breakage of the power supply wire 18 when the projector main body 3 rotates is prevented.

The power supply wire 18 is a wire for supplying power to the power supply circuit 83. The power supply wire 18 includes a first wire 18a extending from the AC adapter terminal 68 and a second wire 18b extending from the main substrate 81. The first wire 18a and the second wire 18b are coupled with a connector 19 in the support pipe 8. Since the connector 19 is not housed inside the projector main body 3, workability at the time of assembly or the like is improved.

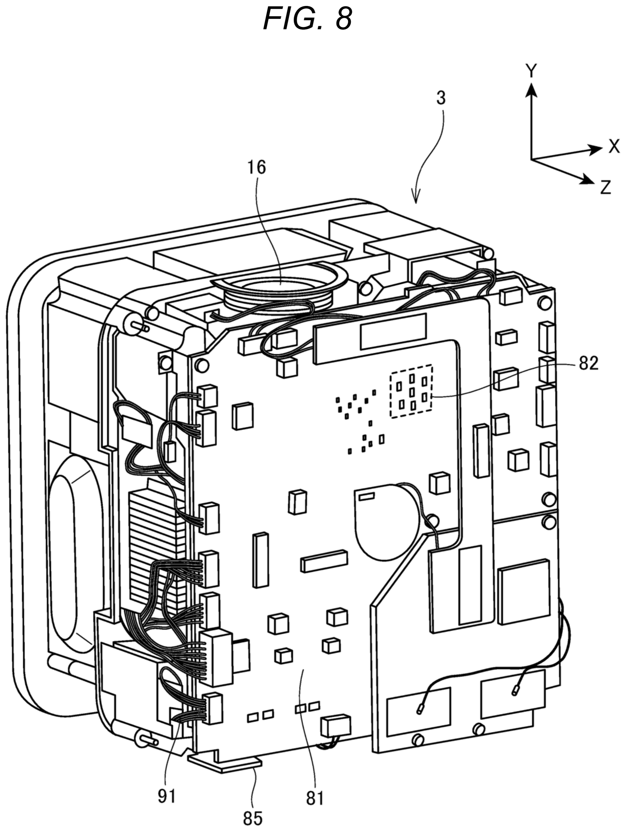

FIG. 8 is a diagram showing the projector main body 3 with the housing 4 and the cover 21 removed.

The main substrate 81 of the projector 1 is housed in the housing 4 and is disposed immediately below the top surface 52 of the projector main body 3. The main substrate 81 is a substrate on which the power supply circuit 83 and an SoC (System on a Chip) 82 are mounted. The main substrate 81 corresponds to an example of a "first substrate". The SoC 82 corresponds to an example of an "integrated circuit element". The main substrate 81 is disposed so as not to be overlapped with conductor.. As a result, conduction noise can be prevented from occurring.

As shown in FIG. 8, an auxiliary substrate 85 on which the third light sources 28 are mounted is disposed on the back surface 53 side of the projector main body 3 so as to be substantially perpendicular to the main substrate 81. The auxiliary substrate 85 is coupled to the main substrate 81 with auxiliary wires 91. The auxiliary substrate 85 is an example of a "third substrate".

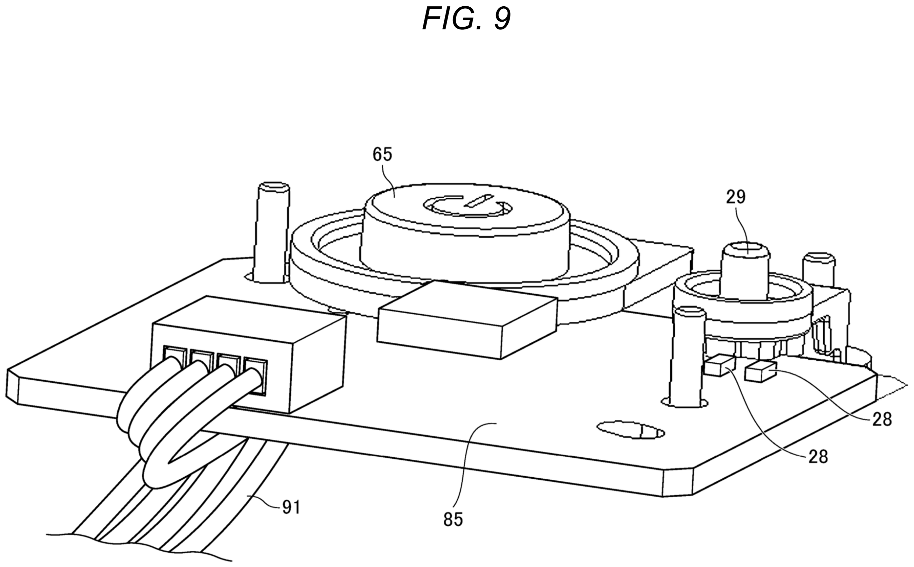

FIG. 9 is a perspective view of the auxiliary substrate 85.

The power button 65 and the third light sources 28 are mounted on the auxiliary substrate 85. In the present embodiment, the third light sources 28 are LEDs.

The third light sources 28 are disposed so as to be covered with the lens 29 at an irradiation direction side. As shown in FIG. 2, a part of the outer end of the lens 29 is exposed to the exterior of the housing 4, and when the third light sources 28 are turned on, the light is emitted to the outside of the projector main body 3 via the lens 29 to thereby function as the indicator 27. In the present embodiment, there are mounted two third light sources 28 different in emission color from each other. Due to lighting patterns of the third light sources 28, the user can recognize the state of the projector 1. Note that the number of third light sources 28 may be one or three.

As illustrated in FIG. 7, a sensor substrate 93 is disposed between the housing 4 and the cover 21. The sensor substrate 93 is a substrate which is separate from the main substrate 81, and on which the microcontroller 24 that controls the touch sensor 22 is disposed. The sensor substrate 93 is an example of a "fourth substrate".

The sensor substrate 93 is separated from the main substrate 81 in order to reduce the footprint, and is disposed between the housing 4 and the cover 21 where a space can be ensured.

In the present embodiment, the microcontroller 24 performs only detection with the touch sensor 22, receives an output signal of the touch sensor 22 via the sensor wire 23 coupled to the touch sensor 22, and performs processing according to the output. Since the microcontroller 24 performs only the detection with the touch sensor 22, it is possible to prevent missing of the detection. The sensor wire 23 is an example of a "wire for transmitting the output of the touch sensor".

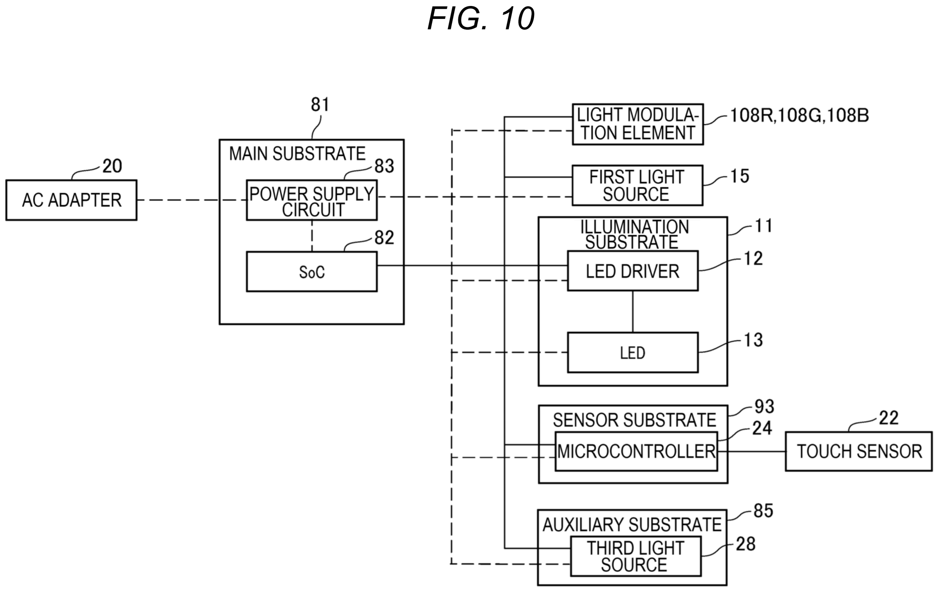

FIG. 10 is a block diagram illustrating a configuration of the substrates 11, 81, 85, and 93. In FIG. 10, solid lines represent input-output relationships of signals, and dashed lines represent electrical coupling relationships. The main substrate 81 is coupled to each of the illumination substrate 11, the auxiliary substrate 85, and the sensor substrate 93. The SoC 82 disposed on the main substrate 81 is coupled to the first light source 15, and controls the first light source 15 directly or via another control element. The SoC 82 may perform various types of control for the projector main body 3 to project an image. For example, the light modulation element may be controlled directly or via another control element based on the image signal. Further, the SoC 82 is coupled to the LED driver 12, and controls, via the LED driver 12, the LEDs 13 mounted on the illumination substrate 11.

Further, the SoC 82 directly controls the third light sources 28 mounted on the auxiliary substrate 85. The third light sources 28 are controlled by pulse width modulation control. Since the SoC 82 directly controls the third light sources 28 without a driver and so on, the number of components can be reduced.

The SoC 82 is coupled to the microcontroller 24 at the sensor substrate 93, and indirectly controls the touch sensor 22 via the microcontroller 24.

That is, in the present embodiment, the SoC 82 directly or indirectly controls the first light source 15, the LEDs 13, the third light sources 28, and the touch sensor 22. As described above, since the SoC 82 collectively controls the plurality of components such as the indicator 27 and the LED driver 12, the number of components can be reduced compared to when circuits are respectively provided.

The main substrate 81 includes the power supply circuit 83. The power is fed to the power supply circuit 83 via the AC adapter 20 and the power supply wire 18. The power supply circuit 83 supplies electric power from the AC adapter 20 to the SoC 82, the first light source 15, the LEDs 13, the third light sources 28, the LED driver 12, the microcontroller 24, various elements, and so on. Since there is adopted the configuration in which the power supply circuit 83 supplies the electric power to a plurality of supply destinations, the circuit configuration can be simplified, and the number of components can be reduced.

Further, in the present embodiment, since the main substrate 81, the illumination substrate 11, the auxiliary substrate 85, and the sensor substrate 93 are separately provided, it is possible to suppress the influence of the heat generated in each substrate on the projector 1.

### 6. Other Embodiments

The embodiment described above is a preferred embodiment of the present disclosure. However, the embodiment described above is not a limitation, and various modified implementations can be made without departing from the scope and spirit of the present disclosure.

For example, in the embodiment described above, the projector 1 includes the leg 7. However, the projector 1 is not limited to the structure including the leg 7. The projector 1 may have a configuration in which the housing 4 is directly placed on the placement surface without including the leg 7. In this case, the plurality of LEDs 13 are preferably arranged on a surface different from the bottom surface 51, such as a side surface.

For example, in the embodiment described above, the projector 1 is provided with the swing mechanism. However, the swing mechanism may be omitted. For example, the leg 7 and the projector main body 3 may be fixed to each other.

For example, in the embodiment described above, the cutout 14 having a rectangular shape is provided in the bottom view of the projector main body 3. However, the shape of the cutout is not particularly limited, and it is possible to adopt an oval cutout or a cutout having a shape in which one end is spreading.

For example, when the number of LEDs as the second light source is small, the SoC may directly control the LEDs without providing the LED driver.

In the embodiment described above, the AC adapter is used as the power adapter, and the electric power is supplied to the projector 1 with the AC adapter terminal provided to the base. However, the power adapter is not limited to the AC adapter, and an existing power adapter can be used. The power supply terminal can be changed in accordance with the power supply adapter used therein.

In the embodiment described above, the opening 22a having an oval shape is provided to the touch sensor 22. However, the touch sensor may be provided with a recess instead of the opening. When the recess is provided to the touch sensor, since the excess solder flows into the recess, it is possible to prevent the solder from contaminating the touch sensor to affect the touch sensor to decrease the sensitivity.

Further, the bonding between the touch sensor and the sensor wire is not limited to soldering, and existing conductive bonding materials can be used.

### 7. Summary of Present Disclosure

The present disclosure will be summarized below as appendices.

(Appendix 1) A projector including: a first light source; an optical system configured to emit image light based on light from the first light source; a housing having a first surface and configured to house the first light source and at least a part of the optical system; a plurality of second light sources different from the first light source and configured to emit light from the first surface side to an outside of the housing; and a controller provided to the housing and configured to control the plurality of second light sources.

According to this configuration, the controller provided to the projector can easily control the second light source different from the first light source.

(Appendix 2) The projector according to Appendix 1, further including a leg configured to support the housing.

According to this configuration, the housing can be supported in a floating state by the leg provided to the housing.

(Appendix 3) The projector according to Appendix 2, further including a rotation mechanism configured to rotate the housing relative to the leg.

According to this configuration, the angle of the housing with respect to the leg can be changed by the rotation mechanism.

(Appendix 4) The projector according to Appendix 3, wherein the leg includes a first portion having a long axis, a first end of the first portion along the long axis is coupled to a first recess having a long axis and opening on one surface of the housing, and a rotational direction of the housing by the rotation mechanism is a direction along the long axis of the first recess.

According to this configuration, when the angle of the housing is changed, the leg is housed in the first recess, and thus the projector can be made compact. In addition, since interference between the housing and the leg can be reduced, a range of an angle at which the housing is rotated can be widened compared to when the recess is not provided.

(Appendix 5) The projector according to Appendix 4, wherein the one surface is the first surface.

According to this configuration, since the light of the second light source can be emitted mainly downward, the presentation effect and the convenience can be improved.

(Appendix 6) The projector according to any one of Appendices 2 to 5, wherein when the leg is installed at a placement surface, the first surface faces the placement surface.

According to this configuration, the placement surface can be illuminated by the second light source.

(Appendix 7) The projector according to any one of Appendices 2 to 5, wherein the leg includes a first portion having a long axis and a second portion supporting the first portion, the first portion includes a first end coupled to the housing and a second end different from the first end, the second end is coupled to the second portion, and the second portion includes a power supply terminal to which a power supply adapter is coupled.

According to this configuration, since the power adapter is coupled to the leg, the cable coupled to the power adapter does not become an obstacle when the angle of the housing is changed.

(Appendix 8) The projector according to Appendix 7, further including: a power supply circuit disposed in the housing; a second wire for feeding power to the power supply circuit; a first wire disposed inside the leg and coupled to the power supply terminal; and a connector disposed inside the leg and configured to couple the first wire and the second wire.

According to this configuration, since the first wire and the second wire can be coupled outside the housing at the time of assembly, the assembly becomes easy.

(Appendix 9) The projector according to any one of Appendices 1 to 8, further including: at least one third light source different from the first light source and the plurality of second light sources and configured to emit light to the outside of the housing; a driver element configured to control the plurality of second light sources; and an integrated circuit element housed in the housing and configured to control the at least one third light source and the driver element.

According to this configuration, the state of the projector can be confirmed from the outside by the third light source. In addition, since the integrated circuit element collectively controls the second light source and the third light source, the number of components can be reduced compared to when separately controlling the second light source and the third light source.

(Appendix 10) The projector according to Appendix 9, wherein the optical system includes a light modulation element, and the integrated circuit element directly or indirectly controls at least one of the first light source, the light modulation element, and the controller.

According to this configuration, since the integrated circuit element controls the light modulation element and the controller, the number of components can be reduced compared to when the light modulation element and the controller are separately controlled.

(Appendix 11) The projector according to any one of Appendices 9 and 10, further including a power supply circuit configured to supply electric power to the plurality of second light sources and the at least one third light source.

According to this configuration, since the power supply circuit can supply the electric power to the second light source and the third light source, the circuit can be simplified.

(Appendix 12) The projector according to Appendix 11, further including a microcontroller, wherein the controller is a touch sensor configured to detect contact, the microcontroller performs processing according to an output of the touch sensor, and the power supply circuit supplies electric power to the microcontroller.

According to this configuration, it is possible to easily control the second light source by the touch sensor detecting the contact by the user.

(Appendix 13) The projector according to any one of Appendices 9 to 12, further including: a first substrate on which the integrated circuit element is disposed; and a second substrate which is separate from the first substrate, and on which the plurality of second light sources is disposed.

According to this configuration, by providing the second substrate separately from the first substrate, it is possible to suppress the influence of heat on the integrated circuit element, and the operation of the projector is unlikely to be affected.

(Appendix 14) The projector according to any one of Appendices 9 to 12, further including: a second substrate on which the plurality of second light sources is disposed; and a third substrate which is separate from the second substrate, and on which the at least one third light source is disposed.

According to this configuration, it is possible to suppress the influence of heat on the integrated circuit element, and the operation of the projector is unlikely to be affected.

(Appendix 15) The projector according to Appendix 13, wherein the driver element is disposed on the second substrate.

According to this configuration, it is possible to reduce the loss of power to the second light source. Further, the influence of heat on the integrated circuit element can be suppressed, and the operation of the projector is less likely to be affected compared to when the driver element is disposed on the first substrate.

(Appendix 16) The projector according to any one of Appendices 9 to 15, further including: a microcontroller; a first substrate on which the integrated circuit element is disposed; and a fourth substrate separate from the first substrate, wherein the controller is a touch sensor configured to detect contact, the microcontroller performs processing according to an output of the touch sensor, and is disposed on the fourth substrate.

According to this configuration, it is possible to suppress the influence of heat on the integrated circuit element, and the operation of the projector is less likely to be affected compared to when the microcontroller is disposed on the first substrate.

(Appendix 17) The projector according to any one of Appendices 9 to 16, wherein the housing includes a fourth surface which is different from the first surface and from which the image light is emitted, and the at least one third light source is disposed on a surface different from the first surface and the fourth surface.

According to this configuration, since the third light source is disposed on the surface different from the surface from which the image light is emitted, it is possible for the user to confirm the third light source without looking into the projection light. Further, even while the projector is projecting the image light, it is easy to confirm the state of the third light source.

(Appendix 18) The projector according to any one of Appendices 9 to 17, wherein the at least one third light source is controlled by pulse width modulation control.

According to this configuration, the third light source can be efficiently controlled by the pulse width modulation control.

(Appendix 19) The projector according to any one of Appendices 1 to 17, wherein each of the plurality of second light sources includes a first light emitting element configured to emit light of a first color and a second light emitting element configured to emit light of a second color different from the first color.

According to this configuration, since the degree of freedom in color and element arrangement is increased, and the degree of design freedom can be increased, the presentation effect and the convenience can be improved.

(Appendix 20) The projector according to Appendix 19, wherein the first light emitting element is a light emitting diode element configured to emit the light of the first color, and the second light emitting element is a light emitting diode element configured to emit the light of the second color.

According to this configuration, since the degree of freedom in color and element arrangement is increased, and the degree of design freedom can be increased, the presentation effect and the convenience can be improved.

(Appendix 21) The projector according to any one of Appendices 1 to 20, wherein each of the plurality of second light sources includes a light emitting diode element.

According to this configuration, since the degree of freedom in color and element arrangement is further increased, and the degree of design freedom can be increased, the presentation effect and the convenience can be improved.

(Appendix 22) The projector according to any one of Appendices 1 to 21, wherein a distance between two second light sources adjacent to each other out of the plurality of second light sources is no smaller than 5 mm and no larger than 30 mm.

According to this configuration, when the distance is no smaller than 5 mm, the mutual influence on the operation by the heat of the second light sources can be suppressed, and when the distance is no larger than 30 mm, the shadow between the second light sources when the second light sources are turned on is less likely to occur.

(Appendix 23) The projector according to any one of Appendices 1 to 22, wherein an angle between a direction in which the image light is emitted and a direction in which light from the second light source is emitted is no smaller than 90 degrees.

According to this configuration, since the second light source illuminates the direction different from the direction in which the image light is emitted, it is possible to prevent the second light source from making it difficult to see the projected image.

(Appendix 24) The projector according to any one of Appendices 1 to 22, wherein the housing includes a fourth surface different from the first surface, and the image light is emitted from the fourth surface.

According to this configuration, since the second light source illuminates the direction different from the direction in which the image light is emitted, it is possible to prevent the second light source from making it difficult to see the projected image.

(Appendix 25) The projector according to any one of Appendices 1 to 24, wherein at least two of the plurality of second light sources are disposed along a contour of the first surface.

According to this configuration, it is easy to illuminate a wide range below the housing.

(Appendix 26) The projector according to any one of Appendices 1 to 24, wherein the housing includes an exit surface that emits light from the second light source, the first surface is an outer surface of the housing, and the exit surface is recessed toward an inside of the housing with respect to the first surface or is the same height as the first surface.

According to this configuration, since the second light source is not exposed from the first surface, the second light source is protected. In addition, since the exit surface does not protrude, the aesthetic appearance is improved.

(Appendix 27) The projector according to any one of Appendices 1 to 24, wherein the housing includes an exit surface that emits light from the second light source, the first surface is an outer surface of the housing, and the exit surface protrudes toward an outside of the housing with respect to the first surface.

According to this configuration, since the irradiation range with the light is increased compared to when the second light source is not exposed from the first surface, it is possible to illuminate a wider range including the lateral direction.

(Appendix 28) The projector according to Appendices 1 to 15, wherein the controller is a touch sensor configured to detect contact.

According to this configuration, the second light source can be easily controlled by the contact by the user. Further, since it is not necessary to provide a button or the like, the aesthetic appearance of the projector is improved.

(Appendix 29) The projector according to Appendix 28, further including a cover facing the housing, wherein the touch sensor is disposed between the housing and the cover.

According to this configuration, since the touch sensor is not exposed to the appearance, the aesthetic appearance of the projector is improved.

(Appendix 30) The projector according to Appendix 29, further including a spacer disposed between the housing and the touch sensor and configured to support the touch sensor.

According to this configuration, the space between the housing and the touch sensor can be filled with the spacer, and a decrease in sensitivity due to air or the like can be suppressed.

(Appendix 31) The projector according to any one of Appendices 28 to 30, further including: a microcontroller configured to perform processing according to an output of the touch sensor; and a wire coupled to the touch sensor and configured to transmit the output of the touch sensor to the microcontroller, wherein the touch sensor has an opening or a recess, and a part of a conductive bonding material that couples the touch sensor and the wire is disposed in the opening or the recess.

According to this configuration, a decrease in the sensitivity of the touch sensor due to adhesion of a part of the conductive bonding material to the touch sensor can be suppressed by the opening or the recess.

(Appendix 32) The projector according to any one of Appendices 1 to 31, wherein the housing includes an intake port through which air is taken in from an outside of the housing, an exhaust port through which air in the housing is discharged, and an opening for a video terminal that receives an input of a video signal, and the controller is disposed on a surface of the housing different from a surface of the housing including at least one of the intake port, the exhaust port, and the opening for the video terminal.

According to this configuration, by providing the controller at a position away from the intake port and the exhaust port, it is possible to suppress adhesion of dust to the intake port and the exhaust port.

(Appendix 33) The projector according to Appendix 32, wherein the housing includes a fourth surface which is different from the first surface and from which the image light is emitted, a third surface different from the first surface and the fourth surface, and including the opening for the video terminal and at least one of the intake port and the exhaust port, and a second surface which is different from the first surface, the third surface, and the fourth surface, and on which the controller is disposed.

According to this configuration, by providing the controller at a position away from the intake port and the exhaust port, it is possible to suppress adhesion of dust to the intake port and the exhaust port.

(Appendix 34) The projector according to any one of Appendices 1 to 33, wherein the housing includes a fourth surface which is different from the first surface and from which the image light is emitted, and a second surface which is different from the first surface and the fourth surface and on which the controller is disposed.

According to this configuration, since the exit surface of the image light, the surface on which the controller is disposed, and the surface on which the second light source is disposed are separate from each other, it is possible to control the controller and use the second light source without being affected by the projection light of the image light.

(Appendix 35) The projector according to any one of Appendices 1 to 34, wherein the controller is disposed on a surface of the housing that faces upward when the housing is placed on a placement surface.

According to this configuration, since the controller is not provided on the placement surface side, the second light source can be easily controlled.

(Appendix 36) A projector including: a first light source; an optical system configured to emit image light based on light from the first light source; a housing configured to house the first light source and at least a part of the optical system and including a first surface and a second surface facing the first surface; a plurality of second light sources different from the first light source and configured to emit light from the first surface side to an outside of the housing; a touch sensor disposed on the second surface and configured to control the plurality of second light sources; a leg configured to support the housing from the first surface side; and a rotation mechanism configured to rotate the housing relative to the leg.

According to this configuration, the second light source can be easily controlled by the touch sensor. Further, even when the housing is rotated, the second light source can be easily controlled by the touch sensor.

(Appendix 37) A projector including: a first light source; an optical system configured to emit image light based on light from the first light source; a housing configured to house the first light source and at least a part of the optical system, and including a first surface and a second surface facing the first surface; a plurality of second light sources which is different from the first light source, disposed along a contour of the first surface, and configured to emit light from the first surface side to the outside of the housing; a touch sensor disposed on the second surface and configured to control the plurality of second light sources; at least one third light source different from the first light source and the plurality of second light sources and configured to emit light to the outside of the housing; a driver element configured to control the plurality of second light sources; an integrated circuit element housed in the housing and configured to control the at least one third light source and the driver element; a microcontroller configured to perform processing according to an output of the touch sensor; a power supply circuit configured to supply electric power to the plurality of second light sources, the at least one third light source, and the microcontroller; a leg including a first portion having a long axis and configured to support the housing from the first surface side; and a rotation mechanism configured to rotate the housing relative to the leg, wherein a first end along the long axis of the first portion of the leg is coupled to a first recess having the long axis and opening on the first surface, and a rotational direction of the housing by the rotation mechanism is a direction along the long axis of the first recess.

According to this configuration, the second light source can be easily controlled by the touch sensor. Further, even when the housing is rotated, the second light source can be easily controlled by the touch sensor. Further, since the integrated circuit element controls a plurality of components, the number of components can be reduced compared to when components are individually provided. In addition, since the power supply circuit supplies the electric power to a plurality of components, the circuit can be simplified and the number of components can be reduced compared to when the circuits are individually provided.

## Claims

1. A projector comprising:
a first light source;
an optical system configured to emit image light based on light from the first light source;
a housing having a first surface and configured to house the first light source and at least a part of the optical system;
a plurality of second light sources different from the first light source and configured to emit light from the first surface side to an outside of the housing; and
a controller provided to the housing and configured to control the plurality of second light sources.

2. The projector according to claim 1, further comprising
a leg configured to support the housing.

3. The projector according to claim 2, further comprising
a rotation mechanism configured to rotate the housing relative to the leg.

4. The projector according to claim 3, wherein
the leg includes a first portion having a long axis,
a first end of the first portion along the long axis is coupled to a first recess having a long axis and opening on one surface of the housing, and
a rotational direction of the housing by the rotation mechanism is a direction along the long axis of the first recess.

5. The projector according to claim 4, wherein
the one surface is the first surface.

6. The projector according to any one of claims 2 to 5, wherein
when the leg is installed at a placement surface, the first surface faces the placement surface.

7. The projector according to any one of claims 2 to 6, wherein
the leg includes a first portion having a long axis and a second portion supporting the first portion,
the first portion includes a first end coupled to the housing and a second end different from the first end,
the second end is coupled to the second portion, and
the second portion includes a power supply terminal to which a power supply adapter is coupled.

8. The projector according to claim 7, further comprising:
a power supply circuit disposed in the housing;
a second wire for feeding power to the power supply circuit;
a first wire disposed inside the leg and coupled to the power supply terminal; and
a connector disposed inside the leg and configured to couple the first wire and the second wire.

9. The projector according to any one of claims 1 to 8, further comprising:
at least one third light source different from the first light source and the plurality of second light sources and configured to emit light to the outside of the housing;
a driver element configured to control the plurality of second light sources; and
an integrated circuit element housed in the housing and configured to control the at least one third light source and the driver element.

10. The projector according to claim 9, wherein
the optical system includes a light modulation element, and
the integrated circuit element directly or indirectly controls at least one of the first light source, the light modulation element, and the controller.

11. The projector according to claim 9, further comprising
a power supply circuit configured to supply electric power to the plurality of second light sources and the at least one third light source.

12. The projector according to claim 11, further comprising
a microcontroller, wherein
the controller is a touch sensor configured to detect contact,
the microcontroller performs processing according to an output of the touch sensor, and
the power supply circuit supplies electric power to the microcontroller.

13. The projector according to any one of claims 9 to 12, further comprising:
a first substrate on which the integrated circuit element is disposed; and
a second substrate which is separate from the first substrate, and on which the plurality of second light sources is disposed.

14. The projector according to any one of claims 9 to 12, further comprising:
a second substrate on which the plurality of second light sources is disposed; and
a third substrate which is separate from the second substrate, and on which the at least one third light source is disposed.

15. The projector according to claim 13, wherein
the driver element is disposed on the second substrate.

16. The projector according to any one of claims 9 to 15, further comprising:
a microcontroller;
a first substrate on which the integrated circuit element is disposed; and
a fourth substrate separate from the first substrate, wherein
the controller is a touch sensor configured to detect contact,
the microcontroller performs processing according to an output of the touch sensor, and is disposed on the fourth substrate.

17. The projector according to any one of claims 9 to 16, wherein
the housing includes a fourth surface which is different from the first surface and from which the image light is emitted, and
the at least one third light source is disposed on a surface different from the first surface and the fourth surface.

18. The projector according to any one of claims 9 to 17, wherein
the at least one third light source is controlled by pulse width modulation control.

19. The projector according to any one of claims 1 to 17, wherein
each of the plurality of second light sources includes a first light emitting element configured to emit light of a first color and a second light emitting element configured to emit light of a second color different from the first color.

20. The projector according to claim 19, wherein
the first light emitting element is a light emitting diode element configured to emit the light of the first color, and
the second light emitting element is a light emitting diode element configured to emit the light of the second color.

21. The projector according to any one of claims 1 to 20, wherein
each of the plurality of second light sources includes a light emitting diode element.

22. The projector according to any one of claims 1 to 21, wherein
a distance between two second light sources adjacent to each other out of the plurality of second light sources is no smaller than 5 mm and no larger than 30 mm.

23. The projector according to any one of claims 1 to 22, wherein
an angle between a direction in which the image light is emitted and a direction in which light from the second light source is emitted is no smaller than 90 degrees.

24. The projector according to any one of claims 1 to 22, wherein
the housing includes a fourth surface different from the first surface, and
the image light is emitted from the fourth surface.

25. The projector according to any one of claims 1 to 24, wherein
at least two of the plurality of second light sources are disposed along a contour of the first surface.

26. The projector according to any one of claims 1 to 24, wherein
the housing includes an exit surface that emits light from the second light source,
the first surface is an outer surface of the housing, and
the exit surface is recessed toward an inside of the housing with respect to the first surface or is the same height as the first surface.

27. The projector according to any one of claims 1 to 24, wherein
the housing includes an exit surface that emits light from the second light source,
the first surface is an outer surface of the housing, and
the exit surface protrudes toward an outside of the housing with respect to the first surface.

28. The projector according to any one of claims 1 to 15, wherein
the controller is a touch sensor configured to detect contact.

29. The projector according to claim 28, further comprising
a cover facing the housing, wherein
the touch sensor is disposed between the housing and the cover.

30. The projector according to claim 29, further comprising
a spacer disposed between the housing and the touch sensor and configured to support the touch sensor.

31. The projector according to any one of claims 28 to 30, further comprising:
a microcontroller configured to perform processing according to an output of the touch sensor; and
a wire coupled to the touch sensor and configured to transmit the output of the touch sensor to the microcontroller, wherein
the touch sensor has an opening or a recess, and
a part of a conductive bonding material that couples the touch sensor and the wire is disposed in the opening or the recess.

32. The projector according to any one of claims 1 to 31, wherein
the housing includes an intake port through which air is taken in from an outside of the housing, an exhaust port through which air in the housing is discharged, and an opening for a video terminal that receives an input of a video signal, and
the controller is disposed on a surface of the housing different from a surface of the housing including at least one of the intake port, the exhaust port, and the opening for the video terminal.

33. The projector according to claim 32, wherein
the housing includes
a fourth surface which is different from the first surface and from which the image light is emitted,
a third surface different from the first surface and the fourth surface, and including the opening for the video terminal and at least one of the intake port and the exhaust port, and
a second surface which is different from the first surface, the third surface, and the fourth surface, and on which the controller is disposed.

34. The projector according to any one of claims 1 to 33, wherein
the housing includes
a fourth surface which is different from the first surface and from which the image light is emitted, and
a second surface which is different from the first surface and the fourth surface and on which the controller is disposed.

35. The projector according to any one of claims 1 to 34, wherein
the controller is disposed on a surface of the housing that faces upward when the housing is placed on a placement surface.
